# EUROPEAN PATENT SPECIFICATION

(11) **EP 3 693 227 B1**
(45) Date of publication and mention of the grant of the patent: **06.12.2023**
(21) Application number: 19155834.5
(22) Date of filing: 06.02.2019
(51) Int. Cl.: B60R 16/023, H01R 4/00

(54) **DEVICE FOR EARTHING AND METHOD**
VORRICHTUNG ZUR ERDUNG UND VERFAHREN
DISPOSITIF ET PROCÉDÉ DE MISE À LA TERRE

(43) Date of publication of application: 12.08.2020
(73) Proprietor: J.S.T. Mfg. Co., Ltd., Osaka 541-0045 (JP)
(72) Inventor: BOWEN, Mike, Halesworth, Suffolk IP19 8EW (GB)
(74) Representative: D Young & Co LLP

(56) References cited:
- WO-A1-2012/057223
- JP-A- 2014 165 168
- JP-A- 2014 175 136
- US-A1- 2012 206 852

## Description

### BACKGROUND

### Field

The present disclosure relates to devices for providing an earthing point for electrical systems of motorised vehicles and methods for assembling earthing points for motorised vehicles.

### Description of Related Art

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior art against the present invention.

Modern motorised vehicles such as automobiles have an array of electrical systems which can deliver a high performance for the vehicles. Modem vehicles not only require electrical systems for conventional lighting both internal and external and for instrumentation, but often the motor of the motorised vehicle itself may have an engine management system, such as for example for an internal combustion engine. The engine may be an electrical engine driven by electrical motors. For all of these electrical systems, an earthling point is required and without the earthing point the electrical systems may not function fail and so the vehicle as a whole is dependent on having a reliable earthing point.

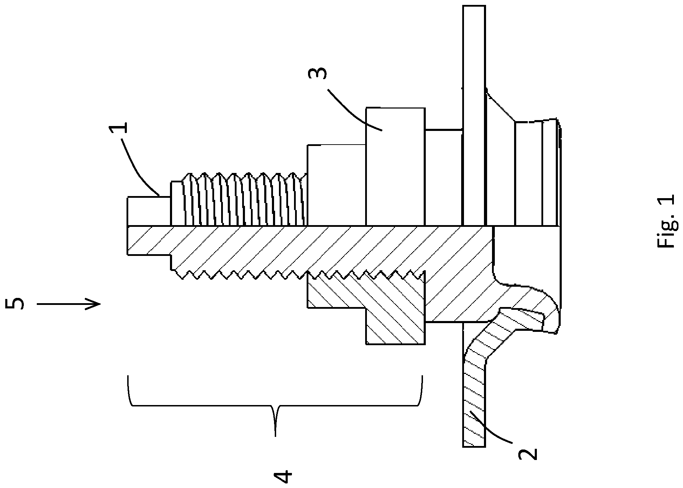

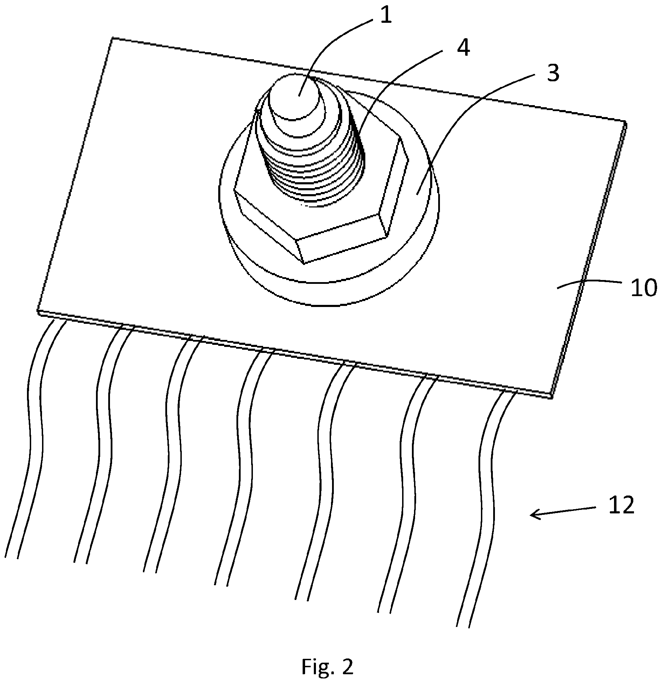

An earthing point is commonly achieved by attaching a device to a body of the vehicle typically an underside of the vehicle. Figure 1 provides an example of such an arrangement. As shown in Figure 1, an earthing point is provided using a device comprising a fixing bolt 1 which is either welded or riveted to a body 2 of a vehicle. The fixing bolt 1 is shown as a cut-away section 5. The electrical earthing point is provided by securing an electrical terminal (not shown) to the fixing bolt 1 using a nut 3. The electrical terminal provides connection terminals for a plurality of electrical systems. Typically such terminals are known as comb terminals because an electrical separation of each of the connections points for each electrical system has an appearance of a comb. The fixing bolt 1 to which the electrical terminal is attached conventionally includes a threaded section 4 to secure a nut 3 which is screwed onto the threaded section 4 before a coating or painting process is performed to keep electrical contact surfaces clean for later connection to the comb terminal. Figure 2 illustrates an example arrangement in which an electrical earthing system includes a fixing bolt 1 in which the nut 3 is assembled with a comb terminal 10. The comb terminal provides a plurality of connection points for earthing a plurality of electrical connectors 12.

As mentioned above, without an electrical earth, many electrical systems will not operate correctly. Therefore it will be appreciated that if the earthing point fails then the electrical systems of the vehicle will be compromised which can lead to a catastrophic failure. Therefore a technical problem exists in improving a reliability of both fixing and attaching an electrical earthing point to a vehicle but also improving an ease with which the electrical earthing point can be attached to a vehicle.

### SUMMARY

The present disclosure can help address or mitigate at least some of the issues discussed above.

Embodiments can provide a device for providing an earthing point of a motorised vehicle, the device comprising a fixing bolt, a terminal and a nut. The fixing bolt is configured to be mounted on a body of the motorised vehicle. The fixing bolt comprises a base section for attaching to the vehicle body, a middle section providing a shaft from the base section and a head section having a cross sectional area which is greater than the middle section to form a ledge between the underside of the head section and the middle section. The terminal provides one or more electrical connections to be earthed, and includes a hole for the terminal to be mounted on the base section of the fixing bolt. The nut has a hole which is large enough for the nut to pass over the head section of the fixing bolt, and has an axial depth which corresponds with an axial depth of the middle section of the fixing bolt. The terminal and the base section of the fixing bolt are configured to prevent the terminal, when mounted on the base section of the fixing bolt, from rotating. One of the base section of the fixing bolt and the terminal includes a plurality of projections arranged in a two dimensional plane. The nut and the plurality of projections are configured so that, when the nut is mounted on the fixing bolt to rotate about the middle section with a surface of a first side of the nut engaging with one of the base section of the fixing bolt or the terminal and another other side of the nut being constrained by the ledge formed between the head section and the middle section of the fixing bolt, the plurality of projections arranged in the two dimensional plane provide an unlocked state in which the nut is free to rotate about the middle section until a surface of the other end of the nut is forced by the plurality of projections against the ledge of the head section to secure the nut and the terminal when the nut is in a locked position by the nut being constrained by the ledge of the head section and the plurality of projections.

Embodiments of the present invention can provide an earthing point which does not use a threaded nut and screw arrangement for securing a terminal to a fixing bolt, which can become loosened by vibration and is more simple to assemble.

Respective aspects and features of the present disclosure are defined in the appended claims.

It is to be understood that both the foregoing general description and the following detailed description are exemplary, but are not restrictive, of the present technology. The described embodiments, together with further advantages, will be best understood by reference to the following detailed description taken in conjunction with the accompanying drawings.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings wherein like reference numerals designate identical or corresponding parts throughout the several views, and:
Figure 1 is a schematic representation of a device for providing an earthing point of a vehicle providing a cut-away sectional view;
Figure 2 is a schematic illustration of a device for providing an earthing point which uses the arrangement of Figure 1 and includes a comb terminal;
Figure 3 is a side view of an illustration of a device for providing an earthing point in a disassembled state according to an example embodiment;
Figure 4 is a side view of an illustration of the device for providing an earthing point of Figure 3 when assembled in a locked position;
Figure 5a is a diagram of an example illustrating the device of Figures 3 and 4 in which a nut of the device is in an unlocked state; Figure 5b is a diagram of an example illustrating the device of Figures 3 and 4 in which the nut has been partly rotated and so is in a partically locked state; and
Figure 5c is a diagram of an example illustrating the device of Figures 3 and 4 in which the nut has been fully rotated and so the device is in a locked state;
Figure 6a, Figure 6b, Figure 6c are examples of a planar terminal or coomb terminal of Figure 6d with different configurations of terminals;
Figure 7 is a plan view of a nut shown in Figures 3 to 6;
Figure 8 is a three dimensional view of the nut shown in Figure 7;
Figure 9 is an example illustration of a configuration of a through hole and a base section of a fixing bolt which prevents the planar terminal from rotating about the fixing bolt; and
Figure 10 is a part schematic part flow diagram illustrating an assembly of the earthing device according to an example embodiment of the present technique.

### DETAILED DESCRIPTION OF THE EMBODIMENTS

As explained above embodiments can provide improvements in devices which provide an earthing point to vehicles. A problem with known devices for providing earthing points to vehicles manufactured by Original Equipment Manufacturers (OEM) is that, as explained above, typical arrangements include a threaded screw and nut. Such arrangements are prone to cross-threading during assembly, in which the nut appears to the assembler to have engaged the bolt whereas in fact the thread on the nut has not aligned and engaged with the thread on the screw. This may appear to the assembler to have engaged, because a torque requirement has been met. However, if the nut and bolt have crossed threaded and not correctly mated the earthing point is likely to fail in service.

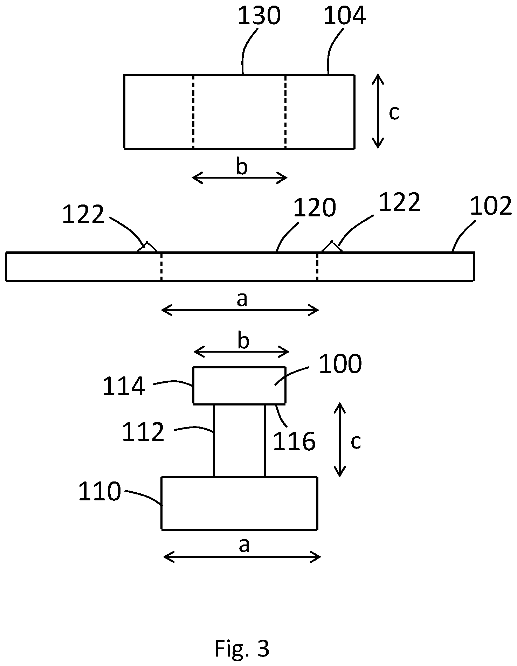

An example of a device for providing an earthing point according to an embodiment which addresses this technical problem is shown in Figure 3. As shown in Figure 3 the device for providing an earth comprises a system of three parts which are a fixing bolt 100, a terminal 102 and a bolt 104. The terminal may be for example a planar terminal, which is provided with a two dimensional plane to form a plurality of connection points to form a comb terminal as explained above. However it will be appreciated that the terminal need not be necessarily planar.

As shown in Figure 3, the bolt or anchor which will be referred to as a fixing bolt 100 includes a base section 110, a middle section 112 and a head section 114. A cross sectional diameter of the base section 110 as shown is larger than the cross sectional area of the middle section 112. The head section 114 has a cross sectional diameter which is larger than that of the middle section 112 and so forms a ledge 116 on an underside of the head section 114. The base section 110 is mounted in or on the body of the vehicle. The base section can be mounted on the body of the vehicle for the fixing bolt in various ways including riveting or welding.

The planar terminal 102 which as indicated above maybe a comb terminal corresponding to that shown in Figure 2 has a through hole 120. A diameter of the through hole 120 is shown to be ***a**.* In one embodiment the width of the through hole 120 ***a*** corresponds to the diameter of the cross section of the base section 110 so that in use the planar terminal 102 can be mounted on the fixing bolt by slotting it over the base section 110.

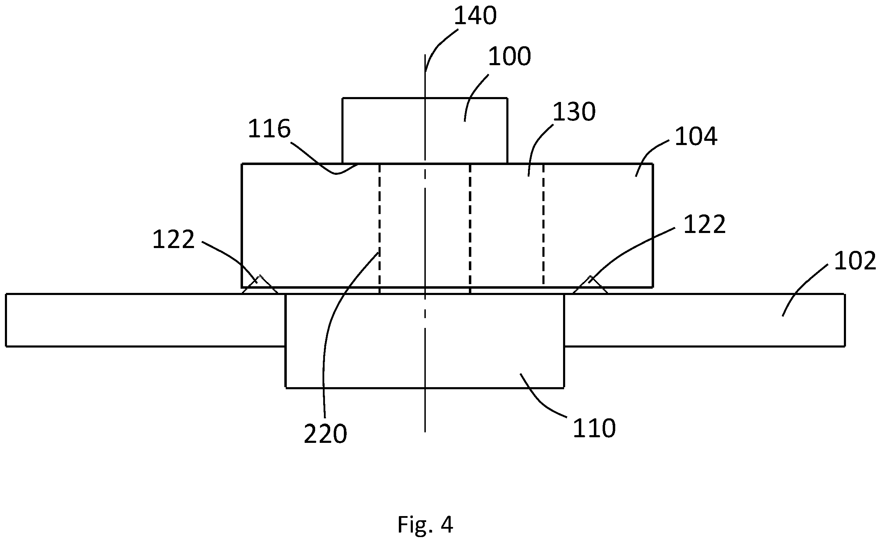

The nut 104 also has a through hole 130. A shown in Figure 3, the width of the through hole 130 of the nut 104 has a width ***b*** which is wider than a cross sectional diameter of the head section of the fixing bolt 100. Also shown in Figure 3 the nut 104 has a height c which is slightly less than the actual length of the middle section 112 of the fixing bolt 100. The planar terminal 102 also includes locking projections 122. As will be explained with reference to Figure 4, as a result of the relative dimensions ***a**, **b*** and ***c*** shown in Figure 3, and the projections 122 present on the surface of the planar terminal 102 the nut 104 when mounted on the fixing bolt 100 can be arranged in a locking position to be forced against the ledge 116 formed on the underside of the head section 100 by the locking projections 122.

As shown in Figure 4, the earthing system is shown in an assembled position in which the nut 104 is in a locking position. To achieve the locking position, first the planar terminal 102 is mounted on the base section 100 at a position, which is 90 degrees to the position shown in Figure 3. As mentioned above, the base section 110 and the hole 120 of the planar terminal 102 are configured or shaped to interlock in the sense that the hole of the planar terminal 120 locks or matches to the shape of the base section 110. Accordingly, the planar terminal 102 does not rotate on the base section 110. Next the nut 102 is located over the head section 100 and placed in a position where it does not engage the locking projections 122. The nut 104 is then turned and forced against the underside of the head section which is the ledge 116 as it engages with the locking projections 122 which provide a biasing force to force the nut against the head section 100 thereby locking the nut in place.

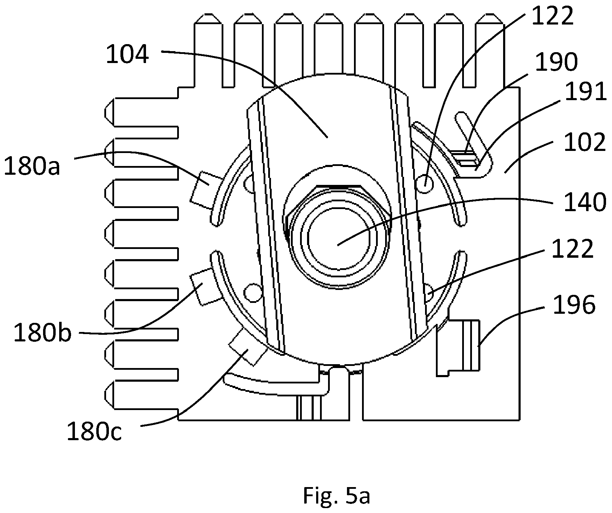

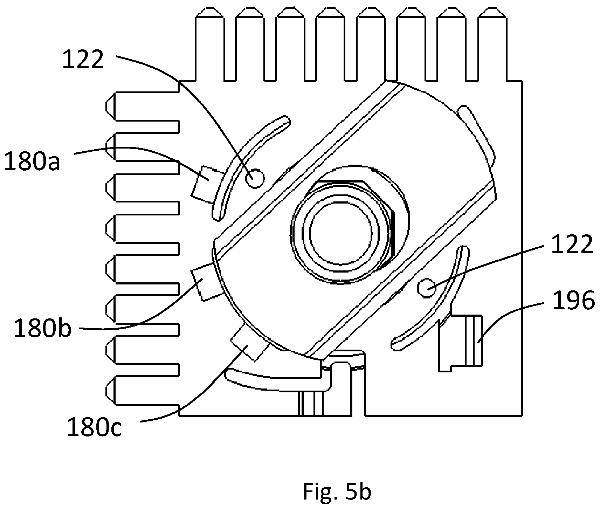

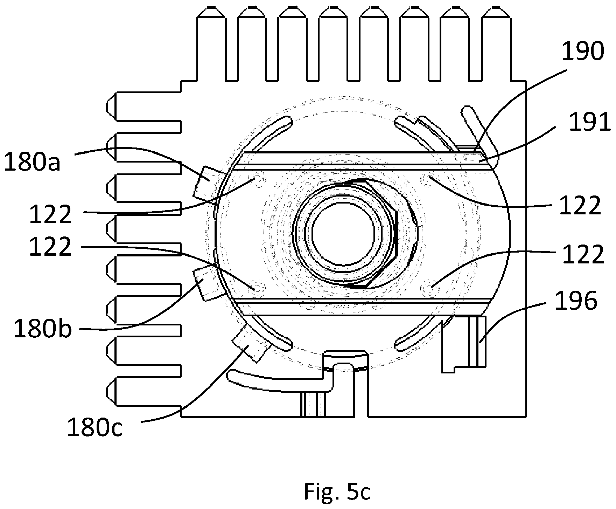

A sequence of diagrams showing a plan view of the earthing device of Figures 3 and 4 at different stages of installation is shown in Figures 5a, 5b, 5c. As shown in Figure Sa the nut 104 and the planar terminal 102 are mounted on the fixing bolt 1 although only the head section 100 is visible. As shown in Figure Sa the nut is in an unlocked position and so has not yet engaged with the locking projections 122.

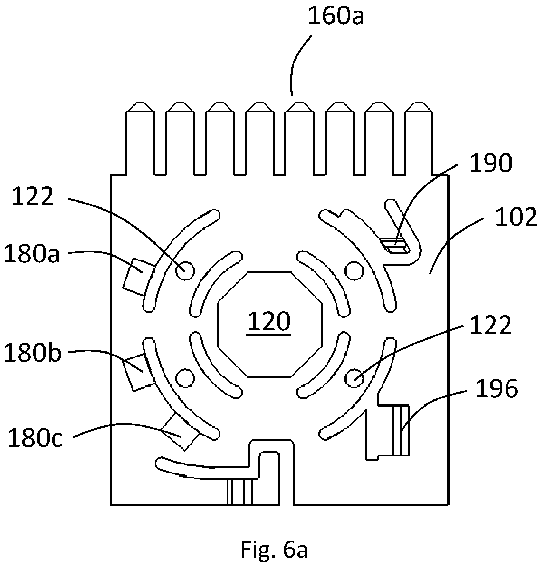

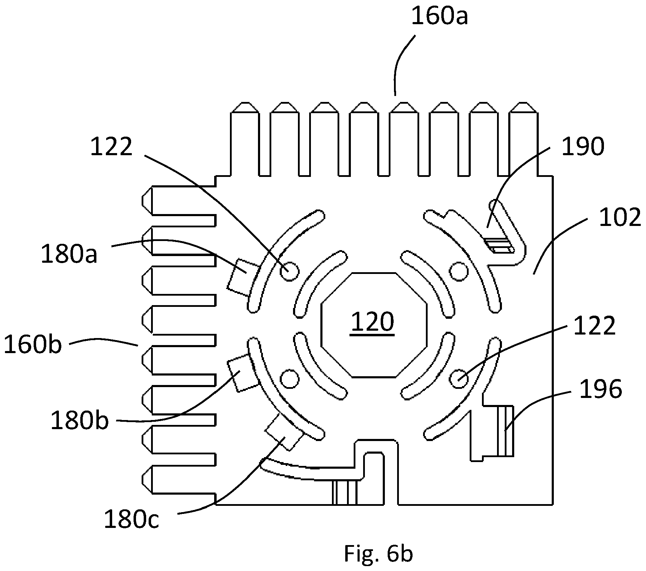

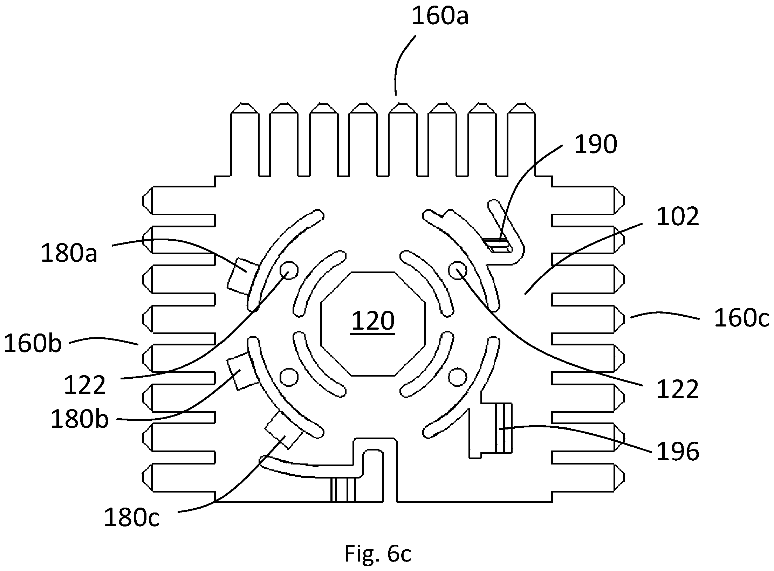

Figures 5b and 5c show different stages at which the nut 104 is turned about a central axis 140 of the fixing bolt 100 from the unlocked position shown in Figure Sa to the partially locked position shown in Figure 5b to the locked position shown in Figure 5c. The locking is achieved by various features of the earthing device, some of which form part of the planar terminal 102, which is shown in more detail in Figure 6a, 6b, 6c.

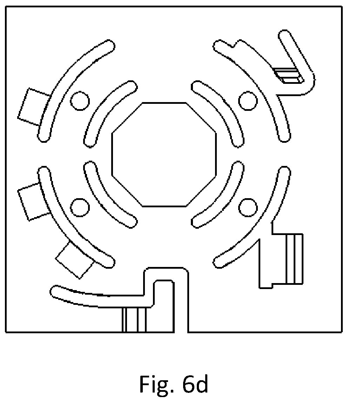

Figure 6a, Figure 6b, Figure 6c show different example configurations of terminals in the form of a comb terminal from a general form shown in Figure 6d as represented by arrows 103. In each of Figure 6a, Figure 6b and Figure 6c different configurations of terminals 160a, 160b, 160c are shown providing various example configurations for connecting different electric circuits to earth. However in common in Figure 6a, Figure 6b and Figure 6c each of the planar terminals 102 include locking projections 122 which are shown essentially at four points on the imaginary rectangle either side of the through hole 120. Also shown are back-off prevention projections 180a, 180b, 180c disposed along an arc formed from a rotation point about the central axis 140 of the fixing bolt 1. The planar terminal 102 also includes an anti-vibration locking tang 190. Finally each of the examples of the planar terminal 102 shown in Figures 6a, 6b, 6c include a stopping projection 196.

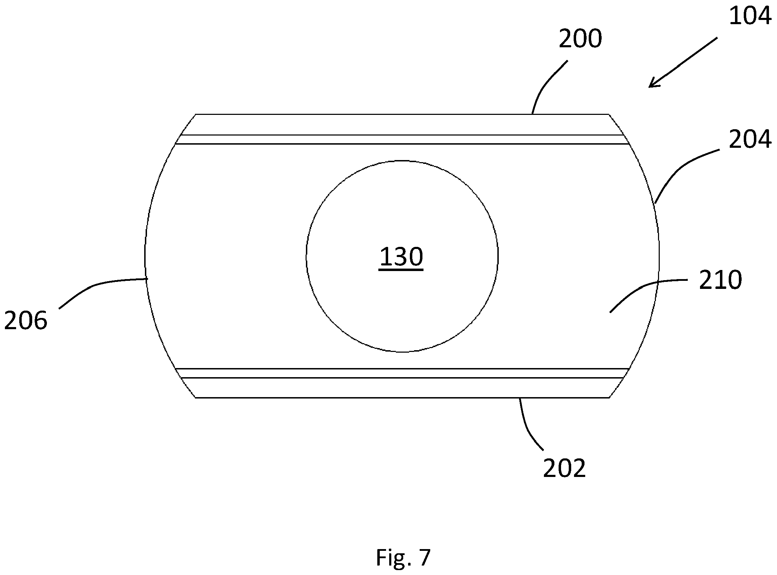

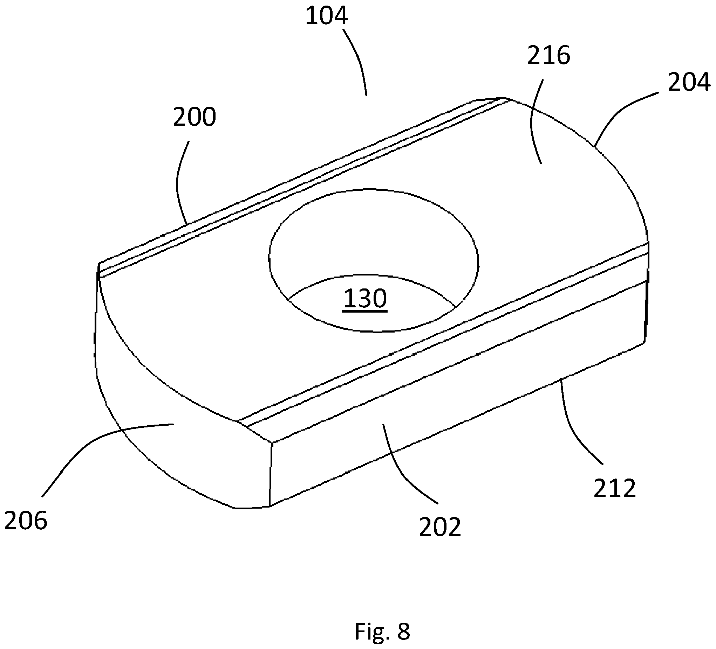

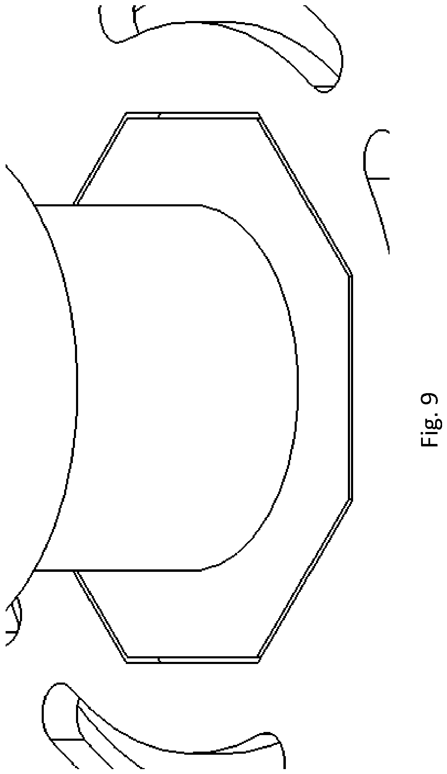

Figure 7 provides a plan view of the nut 104 forming part of the earthing device and Figure 8 provides a three dimensional representation of the nut 104. As shown in Figures 7 and 8, the nut 104 has two substantially flat sides 200, 202 and two substantially curved ends 204, 206. The substantially curved ends 204, 206 have an arced shape or radius of curvature which matches an imaginary or virtual arcuate plane in which the back-off prevention projections are positioned. A top side 210 engages with the ledge 116 of the head section 104 and a bottom side 212 engages with the two-dimensional surface of the planar terminal. Also shown in Figure 9 is a close up view of a profile of the through hole 120 of the planar terminal 102. As shown in Figure 9 the trough hole 120 has an octagonal shape which matches a shape of the base section of the fixing bolt 110. Accordingly when the planar terminal 102 is mounted on the base section of the fixing bolt 110 as shown in Figure 4, the planar terminal 102 slots over the base section 110 and the configuration of the octagonal shape prevents the planar terminal rotating as the nut 104 is rotated.

In the description of the embodiments the use of the terms 'end' and 'side' are interchangeable and should not be used to infer a particular orientation or shape and configuration. For example the curved ends 204, 206 of the nut 104 could be referred to as sides whereas the top side 210 and bottom side 212 could be referred to as one end or the other end or first and second ends respectively.

Returning again to Figure 5a, the nut 104 is shown in an unlocked state with the flat sides 200, 202 not having passed over the locking tang 190. As shown in Figure 5b the nut 104 rotates through approximately 45 degrees passing over the locking tang 190 to depress the locking tang into a recess 191 of the planar terminal 102. As shown in Figure 5b, the back-off prevention projections 180a, 180b, 180c force the nut inwards towards the central axis 140 of the fixing bolt 100 as a result of the curved ends 204, 206 of the nut 104 engaging with the back-off prevention projections 180a, 180b, 180c. A surface of the nut 104 engages with the ledge 116 formed underneath the header section 114 and an inner part of the through hole of the 130 is forced towards or up against a surface of the middle section 220. At this point also, a first of the two diagonally opposed locking projections 122 are engaged pushing the nut up against the ledge 116 of the header section 114.

In Figure 5c the nut 104 has been turned through 90 degrees with respect to the unlocked state in Figure 5b and a second side edge 202 of the nut 104 contacts the stopping projection 196. The other side 200 of the nut 104 moves clear of the locking tang 190 which then returns in an unstressed state to be raised above the plane of the planar terminals 102 so that the locking projection 190 prevents the nut 104 from counter rotating with respect to the locked position. Furthermore an under surface of the nut engages each of the four locking projections 122 forcing the nut up against the inner ledge 116 of the header section 100 thereby locking the nut and the planar terminal 102 on the fixing bolt 100.

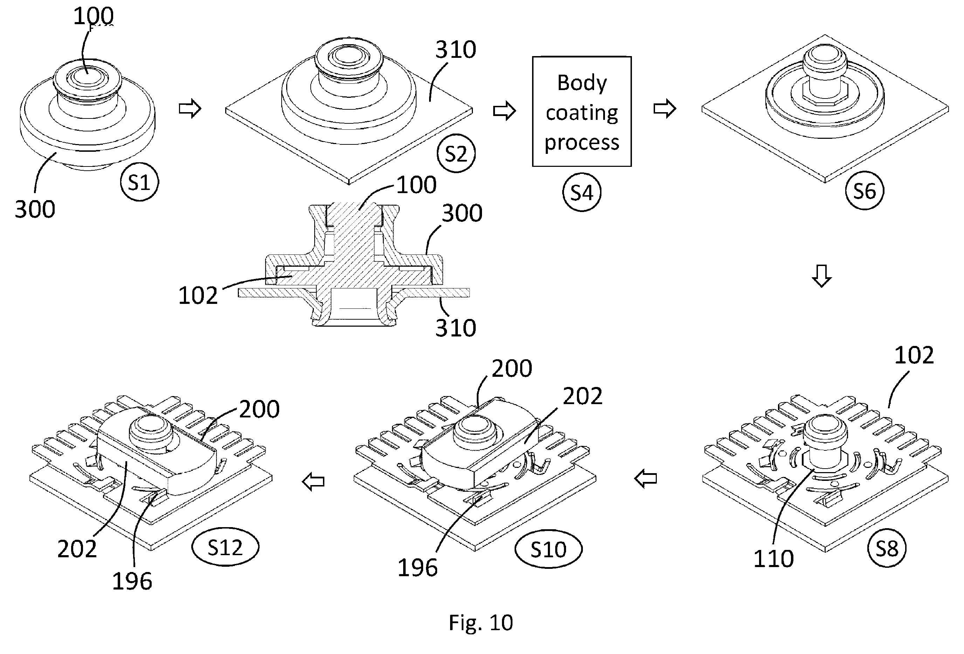

Figure 10 provides an illustration of a method for assembling the earthing system shown in Figures 3 to 9. Each of the illustrations showing the steps in the assembly of the earthing device shown in Figure 10 provide in a three-dimensional view and one cross-sestional illustration in step S2. As shown as a first step S1, a cap 300 is located over the fixing bolt 100 in order to protect the fixing bolt whilst the body of the vehicle is coated. In step S2 the fixing bolt 100 is mounted in the car body 310. In one example the cap 300 may be fabricated from rubber or similar material. As shown below the illustration representing the step S2 in Figure 10 a plan view of the fixing bolt 100 is shown in which the fixing bolt 100 is mounted through the car body 310 and in which the cap 300 is disposed over the fixing bolt 100.

In step S4 a coating which is required for the vehicle body is applied and in step S6 the cap is removed. In step S7 the planar terminal 102 is mounted on the fixing bolt 100 and more particularly the configuration of the base section 110 engages with the through hole 120 of the planar terminal 102 to prevent it rotating. In step S10 the nut is placed over the head section1 14 of the fixing bolt 100 in the unlocked state. In step S12 the nut is rotated so that it passes over the locking tang 190 until the side 202 comes into contact with the stopping projection 196 and the locking tang 190 locks the nut in place by constraining rotation on the other side 200 of the nut 104. The back-off prevention projections 180a, 180b, 180c push the nut 104 against the inside surface of the middle section 112 as explained above.

In the embodiments explained above, the plurality of projections which force the nut against the ledge of the head section of the fixing bolt in the locked position form part of the terminal. In other embodiments, the plurality of projections are formed on the base section. The plurality of projections are formed in a two dimensional plane. In other embodiments the base section also includes the one or more back-off prevention projections, the locking tang and the rotation stopper.

According to the above explanation embodiments of the present technique can provide a device for providing an earthing point for a motorised vehicle, the device comprising a fixing bolt, a planar terminal and a nut. The fixing bolt is configured to be mounted on a body of the motorised vehicle. The fixing bolt comprises a base section for attaching to the vehicle body and having a support surface, a middle section providing a shaft along a common axis with the base section and a head section being formed along the common axis and having a cross sectional area which is greater than the middle section to form a ledge between the underside of the head section and the middle section. The planar terminal provides one or more electrical connections to be earthed, and has a two dimensional surface, which includes a plurality of projections and includes a central hole for the planar terminal to be mounted on the base section of the fixing bolt. The nut has a hole which is large enough for the nut to pass over the head section of the fixing bolt, the nut has an axial depth which corresponds with an axial depth of the middle section of the fixing bolt. The planar terminal and the base section of the fixing bolt are configured to prevent the planar terminal, when mounted on the base section of the fixing bolt from rotating and the nut is configured, when mounted on the fixing bolt to rotate about the middle section with a surface of a first side of the nut engaging with the two-dimensional surface of the planar terminal and a surface of the other side of the nut being constrained by the ledge formed between the head section and the middle section of the fixing bolt. The plurality of projections located on the two dimensional surface of the planar terminal are configured to provide an unlocked state in which the nut is free to rotate about the middle section until a surface of the other side of the nut is forced by the plurality of projections against the ledge of the head section to secure the nut and the planar terminal when the nut is in a locking position by the nut being constrained by the ledge of the head section and the projections on the planar terminal.

Various further aspects and features of the present technique are defined in the appended claims. As will be appreciated by arranging for the nut to lock the planar terminal in place on the fixing bolt without a requirement for a screw thread allows assembly of the earthing device without a requirement to screw a nut onto the thread. As explained above, the arrangement of the projections in a two dimensional plane on the terminal or the base section which forces the nut against the ledge on the underside of the head section of the fixing bolt provides a secure fixture of the terminal without using a threaded nut and screw. As such the disadvantages mentioned above in which the nut and bolt are cross threaded during assembly will not occur. Embodiments may therefore prevent or at least reduce a likelihood of the nut being shaken loose as a result of vibrations.

As will be appreciated the planar or comb terminal may be made from a conducting material. The dimensions of the device for providing the earthing point may be a compromise between minimising a space occupied the earthing device on the vehicle body, whilst being large enough for the device to be installed by hand.

Further particular and preferred aspects of the present invention are set out in the accompanying independent and dependent claims.

Thus, the foregoing discussion discloses and describes merely exemplary embodiments of the present invention. As will be understood by those skilled in the art, the present invention may be embodied in other specific forms without departing from the essential characteristics thereof. Accordingly, the disclosure of the present invention is intended to be illustrative, but not limiting of the scope of the invention, as well as other claims. The disclosure, including any readily discernible variants of the teachings herein, define, in part, the scope of the foregoing claim terminology such that no inventive subject matter is dedicated to the public.

## Claims

1. A device for providing an earthing point of a motorised vehicle, the device comprising
a fixing bolt (100) for mounting on a body (310) of the motorised vehicle, the fixing bolt (100) comprising a base section (110) for attaching to the vehicle body (310), a middle section (112) providing a shaft from the base section (110) and a head section (114) having a cross sectional area which is greater than the middle section (112) to form a ledge (116) between the underside of the head section (114) and the middle section (112),
a terminal (102) for providing one or more electrical connections to be earthed, the terminal (102) including a hole (120) for the terminal (102) to be mounted on the base section (110) of the fixing bolt (100), and
a nut (104) having a hole (130) which is large enough for the nut (104) to pass over the head section (114) of the fixing bolt (100), the nut (104) having an axial depth which corresponds with an axial depth of the middle section (112) of the fixing bolt (100), wherein the terminal (102) and the base section (110) of the fixing bolt (100) are configured to prevent the terminal (102), when mounted on the base section (110) of the fixing bolt (100), from rotating, and one of the base section (110) of the fixing bolt (100) and the terminal (102) includes a plurality of projections (122) arranged in a two dimensional plane and the nut (104) is configured, when mounted on the fixing bolt (100) to rotate about the middle section (112) with a surface of a first side of the nut (104) engaging with one of the base section (110) of the fixing bolt (100) or the terminal (102) and another other side of the nut (104) being constrained by the ledge (116) formed between the head section (114) and the middle section (112) of the fixing bolt (100), and the plurality of projections (122) arranged in the two dimensional plane being configured to provide an unlocked state in which the nut (104) is free to rotate about the middle section (112) until a surface of the other end of the nut (104) is forced by the plurality of projections (122) against the ledge (116) of the head section (114) to secure the nut (104) and the terminal (102) when the nut (104) is in a locked position by the nut (104) being constrained by the ledge (116) of the head section (114) and the plurality of projections (122).

2. A device of claim 1, wherein one of the base section (110) and the terminal (102) includes an anti-vibration locking tang (190) which is positioned with respect to the hole (120) through which the terminal (102) is mounted on the fixing bolt (100) so that after the nut (104) has rotated from the un-locked position towards the locked position, the locking tang (190) can engage with a side of the nut (104) to prevent the nut (104) rotating towards the unlocked state.

3. A device of claim 1, wherein one of the base section (110) and the terminal (102) includes one or more nut (104) back-off prevention projections (180a, 180b, 180c) which are positioned to engage a first side of the nut (104) as the nut (104) rotates towards the locked position which forces the nut (104) toward the middle section (112) of the fixing bolt (100) and the other end of the nut (104) against the ledge (116) of the head section (114).

4. A device of claim 1, 2 or 3, wherein one of the base section (110) and the terminal (102) includes a rotation stopper (196) positioned on the surface of the terminal (102) to engage with a second side of the nut (104), when the nut (104) reaches the locked position to prevent the nut (104) rotating past the locked position.

5. A device of any of claims 1 to 4, wherein the hole (120) in the terminal (102) has a shape which matches and engages with a cross-sectional shape of the base section (110) when mounted which prevents the planar terminal (102) from rotating when mounted on the base section (110).

6. A device of any of claims 1 to 5, wherein the terminal (102) is a planar terminal (102) providing a surface on which the plurality of the projections (122) arranged in the two-dimensional plane are mounted.

7. A device of claim 6, wherein the anti-vibration locking tang (190), the one or more nut back-off prevention projections (180a, 180b, 180c) and the rotation stopper (196) form part of the surface of the planar terminal (102).

8. A device of claim 6, wherein the one or more electrical connections provide a plurality of terminals (102) arranged as a comb.

9. A device of any of claims 1 to 7, wherein the base section (110), the middle section (112) and the head section (114) of the fixing bolt (100) are arranged along a common axis.

10. A device of any of claims 1 to 5, wherein the fixing bolt (100) is configured to be mounted through the body (310) of the vehicle.

11. A method of attaching a device for providing an earthing point to a vehicle, the device comprising a fixing bolt (100), a terminal (102) and a nut (104), the fixing bolt (100) comprising a base section (110) for attaching to the vehicle body (310), a middle section (112) providing a shaft from the base section (110) and a head section (114) having a cross sectional area which is greater than the middle section (112) to form a ledge (116) between the underside of the head section (114) and the middle section (112), the terminal (102) including a hole (120) for the terminal (102) to be mounted on the base section (110) of the fixing bolt (100), and the nut (104) having a hole (130) which is large enough for the nut (104) to pass over the head section (114) of the fixing bolt (100), the nut (104) having an axial depth which corresponds with an axial depth of the middle section (112) of the fixing bolt (100), and one of the base section (110) of the fixing bolt (100) or the terminal (102) including a plurality of projections (122) arranged in a two dimensional plane, the method comprising
attaching the fixing bolt (100) to the vehicle,
mounting the terminal (102) on the base section (110) of the fixing bolt (100), the terminal (102) and the base section (110) of the fixing bolt (100) being configured to prevent the terminal (102) from rotating,
mounting the nut (104) on the fixing bolt (100) so that a first side of the nut (104) engages with one of the base section (110) of the fixing bolt (100) or the terminal (102),
rotating the nut (104) about the middle section (112) of the fixing bolt (100) with the first side of the nut (104) engaging with one of the base section (110) of the fixing bolt (100) or the terminal (102) and a surface of another side of the nut (104) being constrained by the ledge (116) formed between the head section (114) and the middle section (112) of the fixing bolt (100), the rotating being from a first unlocked state in which the first side of the nut (104) does not engage with the plurality of projections (122) to a second locked position in which the first side of the nut (104) is forced towards the head section (114) by the plurality of projections (122) against the ledge (116) of the head section (114) to secure the nut (104) and the terminal (102) when the nut (104) is in the locked position by the nut (104) being constrained by the ledge (116) of the head section (114) and the plurality of projections (122).

12. A method of claim 11, wherein one of the base section (110) and the terminal (102) includes an anti-vibration locking tang (190) which is positioned with respect to the hole (120) through which the terminal (102) is mounted on the fixing bolt (100), and the rotating the nut (104) comprises
rotating the nut (104) so that after the nut (104) has rotated from the un-locked position towards the locked position, the locking tang (190) engages with a side of the nut (104) to prevent the nut (104) rotating towards the unlocked state.

13. A method of claim 11 or 12, wherein one of the base section (110) and the terminal (102) includes one or more nut back-off prevention projections (180a, 180b, 180c) which are positioned to engage a first side of the nut (104), and the rotating the nut (104) comprises
rotating the nut (104) towards the locked position to engage a first side of the nut (104) with the one or more back-off prevention projections (180a, 180b, 180c) forcing the nut (104) toward the middle section (112) of the fixing bolt (100) and the other end of the nut (104) against the ledge (116) of the head section (114).

14. A method of claim 11, 12 or 13, wherein one of the base section (110) and the terminal (102) includes a rotation stopper (196) positioned on the surface of the terminal (102), and the rotating the nut (104) comprises
rotating the nut (104) until a second side of the nut (104) engages with the rotation stopper (196), when the nut (104) reaches the locked position to prevent the nut (104) rotating past the locked position.

15. A method of any of claims 11 to 14, wherein the attaching the fixing bolt (100) to the vehicle comprises
attaching the fixing bolt (100) to the vehicle,
coating the vehicle, and
removing the cap (300).

## Patentansprüche

1. Vorrichtung zum Bereitstellen eines Erdungspunkts eines motorisierten Fahrzeugs, wobei die Vorrichtung umfasst
eine Befestigungsschraube (100) zum Montieren an einer Karosserie (310) des motorisierten Fahrzeugs, wobei die Befestigungsschraube (100) einen Basisabschnitt (110) zum Anbringen an der Fahrzeugkarosserie (310), einen mittleren Abschnitt (112), der einen Schaft von dem Basisabschnitt (110) bereitstellt, und einen Kopfabschnitt (114) umfasst, der eine Querschnittsfläche aufweist, die größer als der mittlere Abschnitt (112) ist, um einen Absatz (116) zwischen der Unterseite des Kopfabschnitts (114) und dem mittleren Abschnitt (112) auszubilden,
eine Anschlussklemme (102) zum Bereitstellen eines oder mehrerer zu erdender elektrischer Anschlüsse, wobei die Anschlussklemme (102) ein Loch (120) umfasst, mit dem die Anschlussklemme (102) an dem Basisabschnitt (110) der Befestigungsschraube (100) montiert werden kann, und
eine Mutter (104), die ein Loch (130) aufweist, das ausreichend groß ist, damit die Mutter (104) über den Kopfabschnitt (114) der Befestigungsschraube (100) geführt werden kann, wobei die Mutter (104) eine axiale Tiefe aufweist, die einer axialen Tiefe des mittleren Abschnitts (112) der Befestigungsschraube (100) entspricht, wobei die Anschlussklemme (102) und der Basisabschnitt (110) der Befestigungsschraube (100) so ausgelegt sind, dass sie verhindern, dass die Anschlussklemme (102), wenn sie an dem Basisabschnitt (110) der Befestigungsschraube (100) montiert ist, sich dreht, und wobei eines des Basisabschnitts (110) der Befestigungsschraube (100) und der Anschlussklemme (102) eine Mehrzahl von Vorsprüngen (122) umfasst, die in einer zweidimensionalen Ebene angeordnet sind, und wobei die Mutter (104) dazu ausgelegt ist, wenn sie an der Befestigungsschraube (100) montiert ist, sich um den mittleren Abschnitt (112) zu drehen, wobei eine Oberfläche einer ersten Seite der Mutter (104) mit einem des Basisabschnitts (110) der Befestigungsschraube (100) oder der Anschlussklemme (102) in Eingriff kommt und eine weitere andere Seite der Mutter (104) durch den Absatz (116) eingespannt ist, der zwischen dem Kopfabschnitt (114) und dem mittleren Abschnitt (112) der Befestigungsschraube (100) ausgebildet ist, und wobei die Mehrzahl von Vorsprüngen (122), die in der zweidimensionalen Ebene angeordnet sind, dazu ausgelegt sind, einen unverriegelten Zustand bereitzustellen, in dem die Mutter (104) sich frei um den mittleren Abschnitt (112) drehen kann, bis eine Oberfläche des anderen Endes der Mutter (104) durch die Mehrzahl von Vorsprüngen (122) gegen den Absatz (116) des Kopfabschnitts (114) gedrückt wird, um die Mutter (104) und die Anschlussklemme (102) zu sichern, wenn die Mutter (104) sich in einer verriegelten Position befindet, indem die Mutter (104) durch den Absatz (116) des Kopfabschnitts (114) und die Mehrzahl von Vorsprüngen (122) eingespannt ist.

2. Vorrichtung nach Anspruch 1, wobei eines des Basisabschnitts (110) und der Anschlussklemme (102) einen schwingungsdämpfenden Verriegelungszapfen (190) umfasst, der in Bezug auf das Loch (120), durch das die Anschlussklemme (102) an der Befestigungsschraube (100) montiert ist, derart positioniert ist, dass, nachdem sich die Mutter (104) von der unverriegelten Position hin zu der verriegelten Position gedreht hat, der Verriegelungszapfen (190) mit einer Seite der Mutter (104) in Eingriff kommen kann, um zu verhindern, dass sich die Mutter (104) hin zu dem unverriegelten Zustand dreht.

3. Vorrichtung nach Anspruch 1, wobei eines des Basisabschnitts (110) und der Anschlussklemme (102) einen oder mehrere Vorsprünge (180a, 180b, 180c) zum Verhindern eines Lösens der Mutter (104) umfasst, die so positioniert sind, dass sie eine erste Seite der Mutter (104) in Eingriff bringen, während sich die Mutter (104) hin zu der verriegelten Position dreht, was die Mutter (104) hin zu dem mittleren Abschnitt (112) der Befestigungsschraube (100) und das andere Ende der Mutter (104) gegen den Absatz (116) des Kopfabschnitts (114) drückt.

4. Vorrichtung nach Anspruch 1, 2 oder 3, wobei eines des Basisabschnitts (110) und der Anschlussklemme (102) einen Drehanschlag (196) umfasst, der auf der Oberfläche der Anschlussklemme (102) positioniert ist, um mit einer zweiten Seite der Mutter (104) in Eingriff zu kommen, wenn die Mutter (104) die verriegelte Position erreicht, um zu verhindern, dass sich die Mutter (104) über die verriegelte Position hinaus dreht.

5. Vorrichtung nach einem der Ansprüche 1 bis 4, wobei das Loch (120) in der Anschlussklemme (102) eine Form aufweist, die mit einer Querschnittsform des Basisabschnitts (110) übereinstimmt und mit dieser in Eingriff kommt, wenn sie montiert ist, was verhindert, dass sich die ebenflächige Anschlussklemme (102) dreht, wenn sie auf dem Basisabschnitt (110) montiert ist.

6. Vorrichtung nach einem der Ansprüche 1 bis 5, wobei die Anschlussklemme (102) eine ebenflächige Anschlussklemme (102) ist, die eine Oberfläche bereitstellt, auf der die Mehrzahl von Vorsprüngen (122), die in der zweidimensionalen Ebene angeordnet sind, montiert sind.

7. Vorrichtung nach Anspruch 6, wobei der schwingungsdämpfende Verriegelungszapfen (190), der eine oder die mehreren Vorsprünge (180a, 180b, 180c) zum Verhindern eines Lösens der Mutter und der Drehanschlag (196) einen Teil der Oberfläche der ebenflächigen Anschlussklemme (102) bilden.

8. Vorrichtung nach Anspruch 6, wobei der eine oder die mehreren elektrischen Anschlüsse eine Mehrzahl von Anschlussklemmen (102) bereitstellen, die als ein Kamm angeordnet sind.

9. Vorrichtung nach einem der Ansprüche 1 bis 7, wobei der Basisabschnitt (110), der mittlere Abschnitt (112) und der Kopfabschnitt (114) der Befestigungsschraube (100) entlang einer gemeinsamen Achse angeordnet sind.

10. Vorrichtung nach einem der Ansprüche 1 bis 5, wobei die Befestigungsschraube (100) dazu ausgelegt ist, durch die Karosserie (310) des Fahrzeugs montiert zu werden.

11. Verfahren zum Anbringen einer Vorrichtung zum Bereitstellen eines Erdungspunkts an einem Fahrzeug, wobei die Vorrichtung eine Befestigungsschraube (100), eine Anschlussklemme (102) und eine Mutter (104) umfasst, wobei die Befestigungsschraube (100) einen Basisabschnitt (110) zum Anbringen an der Fahrzeugkarosserie (310), einen mittleren Abschnitt (112), der einen Schaft von dem Basisabschnitt (110) bereitstellt, und einen Kopfabschnitt (114) umfasst, der eine Querschnittsfläche aufweist, die größer als der mittlere Abschnitt (112) ist, um einen Absatz (116) zwischen der Unterseite des Kopfabschnitts (114) und dem mittleren Abschnitt (112) auszubilden, wobei die Anschlussklemme (102) ein Loch (120) umfasst, mit dem die Anschlussklemme (102) an dem Basisabschnitt (110) der Befestigungsschraube (100) montiert werden kann, und wobei die Mutter (104) ein Loch (130) aufweist, das ausreichend groß ist, damit die Mutter (104) über den Kopfabschnitt (114) der Befestigungsschraube (100) geführt werden kann, wobei die Mutter (104) eine axiale Tiefe aufweist, die einer axialen Tiefe des mittleren Abschnitts (112) der Befestigungsschraube (100) entspricht, und wobei eines des Basisabschnitts (110) der Befestigungsschraube (100) und der Anschlussklemme (102) eine Mehrzahl von Vorsprüngen (122) umfasst, die in einer zweidimensionalen Ebene angeordnet sind, wobei das Verfahren umfasst
Anbringen der Befestigungsschraube (100) an dem Fahrzeug, Montieren der Anschlussklemme (102) auf dem Basisabschnitt (110) der Befestigungsschraube (100), wobei die Anschlussklemme (102) und der Basisabschnitt (110) der Befestigungsschraube (100) dazu ausgelegt sind, zu verhindern, dass sich die Anschlussklemme (102) dreht, Montieren der Mutter (104) auf der Befestigungsschraube (100) derart, dass eine erste Seite der Mutter (104) mit einem des Basisabschnitts (110) der Befestigungsschraube (100) oder der Anschlussklemme (102) in Eingriff kommt, Drehen der Mutter (104) um den mittleren Abschnitt (112) der Befestigungsschraube (100), wobei die erste Seite der Mutter (104) mit einem des Basisabschnitts (110) der Befestigungsschraube (100) oder der Anschlussklemme (102) in Eingriff kommt und eine Oberfläche einer weiteren Seite der Mutter (104) durch den Absatz (116) eingespannt ist, der zwischen dem Kopfabschnitt (114) und dem mittleren Abschnitt (112) der Befestigungsschraube (100) ausgebildet ist, wobei das Drehen von einem ersten unverriegelten Zustand, in dem die erste Seite der Mutter (104) nicht mit der Mehrzahl von Vorsprüngen (122) in Eingriff kommt, zu einer zweiten verriegelten Position erfolgt, in der die erste Seite der Mutter (104) hin zu dem Kopfabschnitt (114) durch die Mehrzahl von Vorsprüngen (122) gegen den Absatz (116) des Kopfabschnitts (114) gedrückt wird, um die Mutter (104) und die Anschlussklemme (102) zu sichern, wenn sich die Mutter (104) in der verriegelten Position befindet, indem die Mutter (104) durch den Absatz (116) des Kopfabschnitts (114) und die Mehrzahl von Vorsprüngen (122) eingespannt ist.

12. Verfahren nach Anspruch 11, wobei eines des Basisabschnitts (110) und der Anschlussklemme (102) einen schwingungsdämpfenden Verriegelungszapfen (190) umfasst, der in Bezug auf das Loch (120) positioniert ist, durch das die Anschlussklemme (102) auf der Befestigungsschraube (100) montiert wird, und wobei das Drehen der Mutter (104) umfasst
Drehen der Mutter (104) derart, dass, nachdem sich die Mutter (104) von der unverriegelten Position hin zu der verriegelten Position gedreht hat, der Verriegelungszapfen (190) mit einer Seite der Mutter (104) in Eingriff kommt, um zu verhindern, dass sich die Mutter (104) hin zu dem unverriegelten Zustand dreht.

13. Verfahren nach Anspruch 11 oder 12, wobei eines des Basisabschnitts (110) und der Anschlussklemme (102) einen oder mehrere Vorsprünge (180a, 180b, 180c) zum Verhindern eines Lösens der Mutter umfasst, die so positioniert sind, dass sie eine erste Seite der Mutter (104) in Eingriff bringen, und wobei das Drehen der Mutter (104) umfasst
Drehen der Mutter (104) hin zu der verriegelten Position, um eine erste Seite der Mutter (104) mit dem einen oder den mehreren Vorsprüngen (180a, 180b, 180c) zum Verhindern eines Lösens in Eingriff zu bringen, wodurch die Mutter (104) hin zu dem mittleren Abschnitt (112) der Befestigungsschraube (100) und das andere Ende der Mutter (104) gegen den Absatz (116) des Kopfabschnitts (114) gedrückt wird.

14. Verfahren nach Anspruch 11, 12 oder 13, wobei eines des Basisabschnitts (110) und der Anschlussklemme (102) einen Drehanschlag (196) umfasst, der auf der Oberfläche der Anschlussklemme (102) positioniert ist, und wobei das Drehen der Mutter (104) umfasst
Drehen der Mutter (104), bis eine zweite Seite der Mutter (104) mit dem Drehanschlag (196) in Eingriff kommt, wenn die Mutter (104) die verriegelte Position erreicht, um zu verhindern, dass sich die Mutter (104) über die verriegelte Position hinaus dreht.

15. Verfahren nach einem der Ansprüche 11 bis 14, wobei das Anbringen der Befestigungsschraube (100) an dem Fahrzeug umfasst
Anbringen der Befestigungsschraube (100) an dem Fahrzeug, Lackieren des Fahrzeugs, und
Entfernen der Kappe (300).

## Revendications

1. Dispositif de création d'un point de mise à la terre d'un véhicule à moteur, le dispositif comprenant
une vis de fixation (100) destinée à être installée sur une carrosserie (310) du véhicule à moteur, la vis de fixation (100) comprenant une section de base (110) destinée à être attachée à la carrosserie (310) du véhicule, une section médiane (112) formant un fût à partir de la section de base (110) et une section de tête (114) présentant une aire en section transversale qui est supérieure à celle de la section médiane (112) afin de former un épaulement (116) entre la face inférieure de la section de tête (114) et la section médiane (112),
une borne (102) pour former une ou plusieurs connexions à relier à la terre, la borne (102) comprenant un trou (120) pour l'installation de la borne (102) sur la section de base (110) de la vis de fixation (100), et
un écrou (104) comportant un trou (130) qui est suffisamment grand pour que l'écrou (104) puisse passer autour de la section de tête (114) de la vis de fixation (100), l'écrou (104) présentant une profondeur axiale qui correspond à une profondeur axiale de la section médiane (112) de la vis de fixation (100), la borne (102) et la section de base (110) de la vis de fixation (100) étant conçues pour empêcher une rotation de la borne (102), lorsqu'elle est installée sur la section de base (110) de la vis de fixation (100), et l'une de la section de base (110) de la vis de fixation (100) et de la borne (102) comprenant une pluralité de saillies (122) disposées dans un plan bidimensionnel et l'écrou (104) étant conçu pour tourner autour de la section médiane (112) lorsqu'il est installé sur la vis de fixation (100), une surface d'un premier côté de l'écrou (104) entrant en prise avec l'une de la section de base (110) de la vis de fixation (100) et de la borne (102) et un autre côté de l'écrou (104) étant maintenu par l'épaulement (116) formé entre la section de tête (114) et la section médiane (112) de la vis de fixation (100), et la pluralité de saillies (122) disposées dans le plan bidimensionnel étant conçues pour établir un état débloqué dans lequel l'écrou (104) est libre de tourner autour de la section médiane (112) jusqu'à ce qu'une surface de l'autre extrémité de l'écrou (104) soit poussée par la pluralité de saillies (122) contre l'épaulement (116) de la section de tête (114) afin d'assujettir l'écrou (104) et la borne (102) lorsque l'écrou (104) se trouve dans une position bloquée par le fait que l'écrou (104) est maintenu par l'épaulement (116) de la section de tête (114) et la pluralité de saillies (122).

2. Dispositif selon la revendication 1, dans lequel l'une de la section de base (110) et de la borne (102) comprend une patte de blocage anti-vibration (190) qui est placée relativement au trou (120) par le biais duquel la borne (102) est installée sur la vis de fixation (100) de telle sorte que, une fois que l'écrou (104) a tourné de la position débloquée vers la position bloquée, la patte de blocage (190) peut entrer en prise avec un côté de l'écrou (104) afin d'empêcher l'écrou (104) de tourner vers l'état débloqué.

3. Dispositif selon la revendication 1, dans lequel l'une de la section de base (110) et de la borne (102) comprend une ou plusieurs saillies de capture (180a, 180b, 180c) de l'écrou (104) qui sont placées pour entrer en prise avec un premier côté de l'écrou (104) tandis que l'écrou (104) tourne vers la position bloquée, ceci poussant l'écrou (104) en direction de la section médiane (112) de la vis de fixation (100) et l'autre extrémité de l'écrou (104) contre l'épaulement (116) de la section de tête (114).

4. Dispositif selon la revendication 1, 2 ou 3, dans lequel l'une de la section de base (110) et de la borne (102) comprend une butée de rotation (196) placée sur la surface de la borne (102) pour entrer en prise avec un second côté de l'écrou (104), lorsque l'écrou (104) atteint la position bloquée, afin d'empêcher l'écrou (104) de tourner au-delà de la position bloquée.

5. Dispositif selon l'une quelconque des revendications 1 à 4, dans lequel le trou (120) dans la borne (102) présente une forme qui correspond à une forme en section transversale de la section de base (110) et s'adapte sur celle-ci lors de son installation, ceci empêchant la borne plane (102) de tourner une fois qu'elle est installée sur la section de base (110).

6. Dispositif selon l'une quelconque des revendications 1 à 5, dans lequel la borne (102) est une borne plane (102) définissant une surface sur laquelle sont installées la pluralité de saillies (122) disposées dans le plan bidimensionnel.

7. Dispositif selon la revendication 6, dans lequel la patte de blocage anti-vibration (190), la ou les saillies de capture (180a, 180b, 180c) de l'écrou et la butée de rotation (196) font partie de la surface de la borne plane (102).

8. Dispositif selon la revendication 6, dans lequel la ou les connexions forment une pluralité de bornes (102) agencées en peigne.

9. Dispositif selon l'une quelconque des revendications 1 à 7, dans lequel la section de base (110), la section médiane (112) et la section de tête (114) de la vis de fixation (100) sont agencées le long d'un axe commun.

10. Dispositif selon l'une quelconque des revendications 1 à 5, dans lequel la vis de fixation (100) est conçue pour être installée à travers la carrosserie (310) du véhicule.

11. Procédé pour attacher un dispositif de création d'un point de mise à la terre à un véhicule, le dispositif comprenant une vis de fixation (100), une borne (102) et un écrou (104), la vis de fixation (100) comprenant une section de base (110) destinée à être attachée à la carrosserie (310) du véhicule, une section médiane (112) formant un fût à partir de la section de base (110) et une section de tête (114) présentant une aire en section transversale qui est supérieure à celle de la section médiane (112) afin de former un épaulement (116) entre la face inférieure de la section de tête (114) et la section médiane (112), la borne (102) comprenant un trou (120) pour l'installation de la borne (102) sur la section de base (110) de la vis de fixation (100), et l'écrou (104) comportant un trou (130) qui est suffisamment grand pour que l'écrou (104) puisse passer autour de la section de tête (114) de la vis de fixation (100), l'écrou (104) présentant une profondeur axiale qui correspond à une profondeur axiale de la section médiane (112) de la vis de fixation (100), et l'une de la section de base (110) de la vis de fixation (100) et de la borne (102) comprenant une pluralité de saillies (122) disposées dans un plan bidimensionnel, le procédé comprenant
attacher la vis de fixation (100) au véhicule,
installer la borne (102) sur la section de base (110) de la vis de fixation (100), la borne (102) et la section de base (110) de la vis de fixation (100) étant conçues pour empêcher une rotation de la borne (102),
installer l'écrou (104) sur la vis de fixation (100) de telle sorte qu'un premier côté de l'écrou (104) entre en prise avec l'une de la section de base (110) de la vis de fixation (100) et de la borne (102),
appliquer une rotation à l'écrou (104) autour de la section médiane (112) de la vis de fixation (100), le premier côté de l'écrou (104) entrant en prise avec l'une de la section de base (110) de la vis de fixation (100) et de la borne (102) et une surface d'un autre côté de l'écrou (104) étant maintenue par l'épaulement (116) formé entre la section de tête (114) et la section médiane (112) de la vis de fixation (100), la rotation se faisant d'un premier état débloqué, dans lequel le premier côté de l'écrou (104) n'entre pas en prise avec la pluralité de saillies (122), à une seconde position bloquée, dans laquelle le premier côté de l'écrou (104) est poussé en direction de la section de tête (114) par la pluralité de saillies (122) contre l'épaulement (116) de la section de tête (114) afin d'assujettir l'écrou (104) et la borne (102) lorsque l'écrou (104) se trouve dans la position bloquée par le fait que l'écrou (104) est maintenu par l'épaulement (116) de la section de tête (114) et la pluralité de saillies (122).

12. Procédé selon la revendication 11, dans lequel l'une de la section de base (110) et de la borne (102) comprend une patte de blocage anti-vibration (190) qui est placée relativement au trou (120) par le biais duquel la borne (102) est installée sur la vis de fixation (100), et l'application d'une rotation à l'écrou (104) comprend
l'application d'une rotation à l'écrou (104) de telle sorte que, une fois que l'écrou (104) a tourné de la position débloquée vers la position bloquée, la patte de blocage (190) entre en prise avec un côté de l'écrou (104) afin d'empêcher l'écrou (104) de tourner vers l'état débloqué.

13. Procédé selon la revendication 11 ou 12, dans lequel l'une de la section de base (110) et de la borne (102) comprend une ou plusieurs saillies de capture (180a, 180b, 180c) de l'écrou qui sont placées pour entrer en prise avec un premier côté de l'écrou (104), et l'application d'une rotation à l'écrou (104) comprend
l'application d'une rotation à l'écrou (104) vers la position bloquée pour mettre un premier côté de l'écrou (104) en prise avec la ou les saillies de capture (180a, 180b, 180c), ceci poussant l'écrou (104) en direction de la section médiane (112) de la vis de fixation (100) et l'autre extrémité de l'écrou (104) contre l'épaulement (116) de la section de tête (114).

14. Procédé selon la revendication 11, 12 ou 13, dans lequel l'une de la section de base (110) et de la borne (102) comprend une butée de rotation (196) placée sur la surface de la borne (102), et l'application d'une rotation à l'écrou (104) comprend
l'application d'une rotation à l'écrou (104) jusqu'à ce qu'un second côté de l'écrou (104) entre en prise avec la butée de rotation (196), lorsque l'écrou (104) atteint la position bloquée, afin d'empêcher l'écrou (104) de tourner au-delà de la position bloquée.

15. Procédé selon l'une quelconque des revendications 11 à 14, dans lequel le fait d'attacher la vis de fixation (100) au véhicule comprend
attacher la vis de fixation (100) au véhicule, appliquer un revêtement au véhicule, et
retirer le cache (300).
